# EUROPEAN PATENT APPLICATION

(11) **EP 4 848 017 A1**
(43) Date of publication of application: **02.12.2026**
(21) Application number: 26180889.3
(22) Date of filing: 26.05.2026
(51) Int. Cl.: G05B 19/4065, G05B 19/401

(54) **GANTRY MILLING MACHINE FOR MACHINING SEMI-FINISHED PRODUCTS**

(30) Priority: 28.05.2025 IT 202500012310
(71) Applicant: C.M.S. Costruzioni Macchine Speciali S.P.A., 24019 Zogno (BG) (IT)
(72) Inventor: GHISALBERTI, Oliviero, 24019 Zogno (BG) (IT)
(74) Representative: Gallo, Gianluca

(57) **Abstract**

Described is a gantry milling machine (1) comprising a supporting structure (10), a working unit (20) with an electrospindle (21) and working tool (22), a work table (30), a movement system (40), a control unit (50) and a measuring device (60) configured for capturing a series of values of distance from the working tool (22). The control unit (50) is configured to position the working unit (20) in a plurality of measuring positions, capture distance measurements from the measuring device (60) in each of the measuring positions and to find, on the basis of the distance measurements and the corresponding measuring positions, a real value of at least one operational or dimensional parameter of said working unit (20).

## Description

The present invention relates to a gantry milling machine for machining semiproducts, as well as to a method for setting a gantry milling machine.

In this description, the term "semiproducts" means the semi-finished materials commonly used in the industrial machining processes, such as natural and synthetic stone (for example marble, granite and quartzite), wooden elements (solid blocks and solid or laminated wood panels), composite and agglomerated materials (resins, solid surface, porcelain stoneware, ceramics), and similar supports intended for subsequent milling and finishing.

In the relevant sector, the gantry milling machines represent a well-established solution for the machining of these materials. These machines typically comprise a supporting structure including at least one vertical upright and a transverse bridge fixed to it, a working unit provided with an electrospindle and a tool, a work table positioned beneath the bridge, a movement system for the relative movement of the working unit relative to the work table, and a programmable control unit to coordinate the movements of the working unit relative to the work table.

Typically, the term "working tool" can mean milling discs, of the type comprising an internal core that acts as a supporting body and a plurality of teeth distributed radially on the core defining teeth, but also candle mills, cup mills or drill bits.

Despite the widespread use of these systems, the Applicant has identified significant issues during the setting up of the working unit, limiting the precision of the machining. The instruments currently available allow an exclusively static measurement of the diameter of the tool disc, carried out with the machine stationary and without rotation of the tool. This method, although characterised by acceptable repeatability, introduces uncertainties since the detection takes place through the mechanical contact between a feeler and the teeth of the tool, sampling values which are not representative of the real geometry under dynamic conditions. In particular, the static measurement does not take into account any eccentricities or thermomechanical deformations of the tool during the rotation, thus compromising the dimensional accuracy of the semiproducts.

Further limitations concern the absence of integrated systems for the measurement of critical parameters such as the thickness of the core, the thickness of the tooth and the centreing of the tooth on the core. These quantities are currently determined manually by means of gauges, with obvious risks of human error and discrepancies between data entered and real values. The centreing of the teeth, in particular, would require a complex optical or metrological analysis, often replaced by standardised values not adhering to the specifications of the tool. These approximations result in imperfections in the machining, especially in finishing or internal cutting operations, where the overlapping between the cutting of the disc and that of additional milling discs requires very precise alignment.

Similarly, comparable critical issues arise in the characterisation of accessory tools, such as small drills, cutters and profiled grinding wheels. The current setting neglects the diameter. The diameter of these tools is the data item that enables precise machining of the finished or semiproduct to be obtained, whether it is machined by a single tool or by a series of tools along the same path to achieve a higher-grade finish. In this case, as well as the dimensional aspect of the workpiece, the measurement of the diameter carried out dynamically also allows precise management of excess material between the various tools and improves their efficiency both in terms of linear metres travelled and the qualitative outcome of the final result. This results in a compromise between productivity and quality, with inevitable re-machining or waste in high-precision applications.

In this context, the technical purpose of the present invention is therefore to provide a gantry milling machine for the machining of semiproducts as well as a method for setting a gantry milling machine for the machining of semiproducts that are able to overcome the drawbacks arising from the prior art.

The aim of the present invention is therefore to provide a gantry milling machine for the machining of semiproducts as well as a method for setting a gantry milling machine for the machining of semiproducts that guarantee a multidimensional dynamic detection of the parameters of the working unit under real operational conditions, with automatic compensation of thermomechanical tolerances and of the rotational asymmetries.

The technical purpose indicated and the specified aim are substantially achieved by a gantry milling machine for the machining of semiproducts as well as a method for setting a gantry milling machine for the machining of semiproducts comprising the technical features set forth respectively in Claims 1 and 12 and/or in one or more of the claims dependent thereon.

The gantry milling machine according to the invention essentially comprises a supporting structure, a working unit, a work table, a movement system, a control unit and a measuring device.

The supporting structure is provided with at least one vertical upright and a transverse bridge, integral with at least one upright.

The working unit is provided with an electrospindle and a working tool, connected to the electrospindle. The working tool is connected to the electrospindle in a removable fashion, so it can be replaced as a function of the work program to be carried out on the semiproduct.

According to an example, the working tool may be a milling disc. The milling disc comprises an internal core which acts as a load-bearing body and a plurality of teeth, radially distributed on the core, defining teeth. According to further examples, the working tool may be an end mill, a cup mill or a drill bit. However, unless otherwise specified, reference will be made below to the embodiment comprising a milling disc. It is understood that this embodiment is preferred, an example and therefore not limiting.

The work table is positioned in a position below the transverse bridge. The work table can be fixed or movable.

The movement system is connected to the supporting structure and to the working unit and is configured to move the working unit with respect to the work table. In other words, the movement system allows the movement of the working unit at least along three Cartesian axes, ensuring a precise three-dimensional positioning with respect to the work table.

The control unit is programmable and is configured to coordinate the movements of the working unit with respect to the work table. In other words, the unit can integrate a CNC capable of processing three-dimensional models and generating optimised trajectories for the working tool, in order to determine a machining program for the semiproduct.

According to a particular aspect of the present invention, the measuring device is configured to capture a series of values of distance from the working tool. Preferably, the capturing occurs while the measuring device is stationary relative to the supporting structure or the work table. The measuring device can be fixed to the supporting structure or to the work table.

The control unit is then configured to position the working unit at a plurality of measuring positions, for capturing distance measurements from the measuring device at each of the measuring positions and for finding, on the basis of the distance measurements and the corresponding measuring positions, a real value of at least one operational or dimensional parameter of the working unit.

As will be described in more detail below, the term "operational or dimensional parameter" means a geometric or dynamic quantity influential on the machining program of the semiproduct that relates to the working unit and, in particular, the working tool. In other words, such a system can quantify both the nominal dimensions and the variations induced by the operation, including deformations, progressive wear, and structural misalignments.

The method according to the invention is preferably carried out by means of the above-mentioned gantry milling machine.

The method comprises the step of positioning the working unit in a plurality of predetermined measuring positions with respect to the work table.

The method comprises the step of capturing, by means of the measuring device, values of distance between the measuring device and the working tool at each measuring position.

The method comprises the step of finding, by means of a programmable control unit, the real value of at least one operational or dimensional parameter of the working unit, processing the captured values of distance and the corresponding measuring positions.

Advantageously, the Applicant has found that the use of a measuring device in combination with the control unit allows the entire geometry of the working tool as well as its spatial orientation to be monitored in real time, both in non-operational conditions and in dynamic operational conditions, detecting with high resolution any axial and radial eccentricities, dimensional variations of the working tool due, for example, to wear or thermal expansions and elastic deformations induced by the rotary motion.

The above-mentioned gantry milling machine for processing semiproducts and the method for setting a gantry milling machine for machining semiproducts according to the invention may also comprise one or more of the technical aspects that will be outlined below.

According to one aspect, the measuring device may be a non-contact optical measuring device.

According to a particularly advantageous embodiment, the measuring device is a laser.

According to one aspect, the measuring device may be configured for capturing measurements when the working unit, and in particular the working tool, is driven in rotation.

According to one aspect, wherein said measuring device is a laser device. A plurality of examples of the at least one operational or dimensional parameter will be defined below. Further, example and therefore non-limiting methods for finding the real value of such dimensional or operational parameters will also be described.

According to an example, the at least one operational or dimensional parameter may be the axial inclination of the working tool. In other words, the parameter quantifies the angular deviation between the real axis of rotation of the tool and the ideal reference axis of the machine (for example, the axis of the electrospindle)

The term "axial inclination" means an angular misalignment of the axis of rotation of the working tool with respect to the nominal geometry of the working unit. This inclination may originate from a non-orthogonal mounting of the disc on the electrospindle, from wear of the fixing components, or from an intrinsic misalignment of the electrospindle itself. This error may generate a component of axial oscillation during the rotation, the extent of which increases proportionally with the radius of the tool, and/or may generate misalignment between the geometry calculated by the CNC and geometry of the machine.

Operationally, the working unit is positioned in at least two radially distant measuring points along the plane of the working tool. The measuring device captures values of distance at these points while the tool is rotating. A systematic difference between the measurements indicates the presence of an axial inclination of the axis of rotation of the working tool. For example, the distance measured on the outer edge of the disc is greater at a first point than at a second diametrically opposite point, which indicates a tilt of the axis of rotation towards the second point.

According to an example, the at least one operational or dimensional parameter may be an eccentricity of the axis of rotation of the working tool. In other words, the parameter identifies the radial deviation of the centre of gravity of the tool with respect to the nominal axis of rotation.

The term "eccentricity" means a radial displacement of the axis of rotation with respect to the theoretical centre: the axis rotates around a second axis that is parallel but translated.

According to an example, the at least one operational or dimensional parameter may be the real machining diameter of the teeth of the milling disc.

At the operational level, the working unit is moved so that the measuring device takes a measurement substantially tangential to the end of the teeth of the milling disc during the rotation of the working tool, allowing the maximum diameter described by the teeth under dynamic conditions to be detected.

According to an example, at least one operational or dimensional parameter may be a radial profile of the teeth.

At the operational level, the working unit is made to oscillate radially while the measuring device, kept tangentially aligned, captures the contour of the moving teeth, reconstructing the real profile by means of data interpolation. According to an example, the at least one operational or dimensional parameter may be the flatness of the milling disc. In other words, the parameter evaluates the maximum deviation of the surface of the working tool from an ideal plane.

The working unit is positioned in a first position to measure a distance on one side of the disc, in the vicinity of a first point. Subsequently, it is moved to the second position to detect a similar distance, but at a different point, along the same radial direction but at a different distance from the centre of the milling disc. The comparison between the two measurements makes it possible to determine if the disc has deformations that alter its flatness. According to an example, at least one operational or dimensional parameter may be the thickness of the core of the milling disc. In other words, the parameter defines the thickness of the load-bearing body of the working tool.

At the operational level, the working unit is positioned so that the measuring device detects the distance on one side of the core. Subsequently, the tool is rotated by 180° and the measurement is repeated. The difference between the two measurements, corrected for the known geometry of the system, determines the real thickness of the core.

According to an example, at least one operational or dimensional parameter may be the thickness of the teeth of the milling disc.

At the operational level, the working unit is positioned so that the measuring device detects the distance on one side of the teeth. Subsequently, the tool is rotated by 180° and the measurement is repeated. The difference between the two measurements, corrected for the known geometry of the system, determines the real thickness of the teeth.

According to one aspect, the control unit can be configured to set up a program for machining the semiproduct as a function of the real values of the determined operational or dimensional parameters. In other words, the control unit automatically adapts the machining program of the semiproduct as a function to the real characteristics of the working tool detected in real time.

Advantageously, this allows the cutting efficiency to be optimised, since the machining program takes into account all the deformations of the cutting tool, in particular the nominal deformations of the working tool and the deformations induced during the cutting operations.

According to one aspect, the gantry milling machine may comprise an accessory movement system configured to move the measuring device between a disengaged position and an operational position. Advantageously, this technical feature makes it possible to protect the measuring device from vibrations, debris and accidental collisions, preserving its accuracy and the operational life.

According to one aspect, the control unit may be configured to compare the real value of the at least one operational or dimensional parameter with a reference value of the corresponding operational or dimensional parameter, and wherein the control unit is configured to generate a positive or negative signal representing the result of the comparison, preferably by means of the user interface device. The positive signal may be representative of the fact that the real value of the at least one operational or dimensional parameter substantially coincides (that is, it is within an allowed tolerance, or range) with the reference value of the corresponding operational or dimensional parameter. Further, the negative signal may be representative of the fact that the real value of the at least one operational or dimensional parameter does not substantially coincide (that is, it is outside an allowed tolerance, or range) with the reference value of the corresponding operational or dimensional parameter. In other words, the system can generate visual/acoustic alarms if, for example, the eccentricity of the working tool exceeds a preset threshold, signalling the need for maintenance or control. Advantageously, this feature prevents the production of non-conforming components, reducing waste and re-machining costs, and favours predictive maintenance.

According to one aspect, in response to a negative signal, the control unit may be configured to generate a command to replace the working tool with a test tool which is not deformed, to position the working unit with the test tool at a plurality of measuring positions, to capture new distance measurements from the measuring device after the replacement and to identify a malfunction of the electrospindle or of the movement system if the negative signal persists, or to identify a defect of the replaced working tool if the signal becomes positive. In other words, if the control unit finds that the working unit has a dimensional or operational parameter that deviates from a standard value, the method according to the invention comprises steps of analysing this error. In particular, following the negative signal generated by the control unit, an operator replaces the working tool with a test tool that is not deformed and is operational. The method therefore comprises repeating the same measurements on the test tool so as to verify whether the problems effectively concern the working tool, the electrospindle, or the movement system.

Advantageously, this procedure increases the diagnostic reliability of the gantry milling machine, automatically distinguishing between instrumental defects (wear, deformations of the tool) and mechatronic failures (electrospindle, movement system). In fact, the use of a non-deformed test tool acts as an absolute reference, isolating the variables in play: if the negative signal remains, anomalies of the working tool are excluded, orienting maintenance towards the structural components. On the contrary, a positive signal after replacement confirms the replaceable nature of the defect, reducing the machine downtimes and preventing unnecessary interventions.

According to one aspect, the gantry milling machine may comprise a user interface device, connected to the control unit and configured to receive commands from the user and to control at least the measuring operations. In accordance with one aspect, the user interface device may be connected remotely to the control unit via a wireless or network connection. In other words, the operator can monitor and control the setting from mobile devices or external stations. Advantageously, the remote connectivity enables the centralised supervision of multiple machines, cloud storage of the process data, and remote technical assistance, thus increasing flexibility and productivity.

Further characteristics and advantages of the present invention will become clearer from the indicative, and therefore non-limiting, description of a preferred, example and therefore non-limiting embodiment of a gantry milling machine for the machining of semiproducts and of a method of setting a gantry milling machine for the processing of semiproducts, in accordance with the present invention.

The description is set out below with reference to the accompanying drawings which are provided solely for purposes of illustration without restricting the scope of the invention, in which:
- Figure 1 shows a schematic view of a gantry milling machine according to the present invention;
- Figure 2A shows an example operational sequence actuated by means of the gantry milling machine of Figure 1;
- Figure 3A and 3b show an example operational sequence actuated by means of the gantry milling machine of Figure 1;
- Figure 4A and 4b show an example operational sequence actuated by means of the gantry milling machine of Figure 1;
- Figure 5A and 5b show an example operational sequence actuated by means of the gantry milling machine of Figure 1;
- Figure 6A and 6b show an example operational sequence actuated by means of the gantry milling machine of Figure 1;

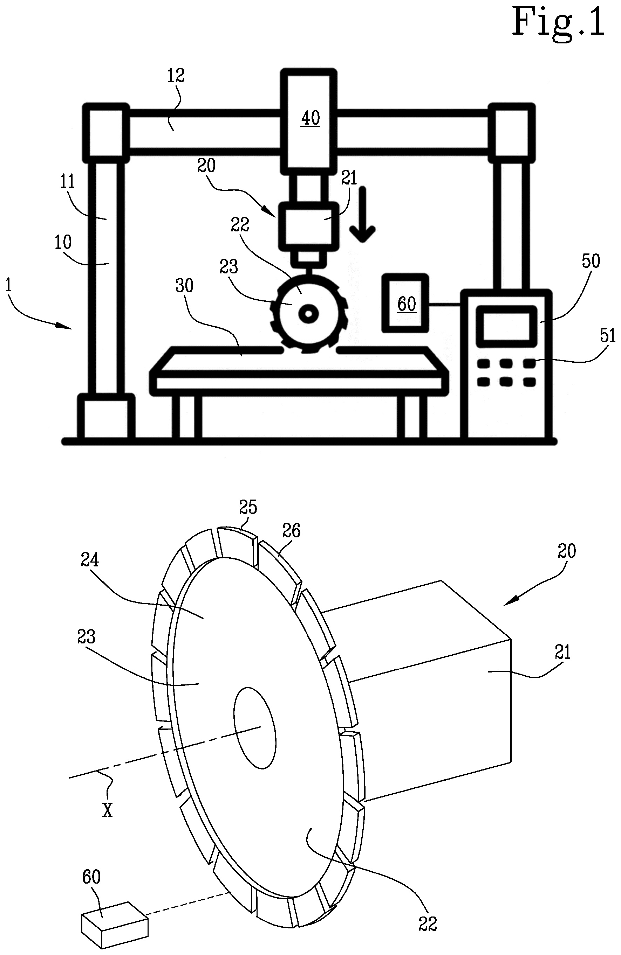

Figure 1 illustrates an embodiment of the gantry milling machine, which is indicated with reference numeral 1. As can be seen, the gantry milling machine 1 comprises a supporting structure 10, a working unit 20, a work table 30, a movement system 40, a control unit 50 and a measuring device 60.

The supporting structure 10 is provided with two parallel supporting uprights 11 and a transverse bridge 12 fixed to the uprights 11. According to alternative embodiments not illustrated, the supporting structure has a single upright 11.

The working unit 20 is provided with an electrospindle 21 and a working tool 22, connected to the electrospindle 21. The working tool 22 is connected to the electrospindle 21 in a removable manner so that it can be replaced as a function of the work program to be carried out on the semiproduct.

The working tool 22 is preferably a milling disc 23. The milling disc 23 comprises an internal core 24 which acts as a load-bearing body and a plurality of teeth 25, radially distributed on the core 24, defining teeth 26. The work table 30 is positioned below the transversal bridge 12. Preferably, the work table 30 is fixed.

The movement system 40 is connected to the supporting structure 10 and to the working unit 20 and is configured to move the working unit 20 relative to the work table 30.

The control unit 50 is programmable and is configured to coordinate the movements of the working unit 20 with respect to the work table 30.

The measuring device 60 is fixed to the supporting structure 10 or to the work table 30 and is configured for capturing a series of values of distance from the working tool 22. Preferably, the capturing occurs while the measuring device 60 is stationary relative to the supporting structure 10 or the work table 30. Preferably, the measuring device 60 is a non-contact optical measuring device. Even more preferably, the optical measuring device 60 is a laser device.

The control unit 60 is configured to position the working unit 30 at a plurality of measuring positions, for capturing distance measurements from the measuring device 60 at each of the measuring positions and for finding, on the basis of the distance measurements and the corresponding measuring positions, a real value of at least one operational or dimensional parameter of the working unit 20.

At an operational level, the method comprises positioning the working unit 20 in a plurality of predetermined measuring positions relative to the work table 10, capturing, by means of the measuring device 60, values of distance between the measuring device 60 and the working tool 22 at each measuring position and finding, by means of the control unit 50, the real value of at least one real operational or dimensional parameter of the work unit 30, processing the captured values of distance and the corresponding measuring positions.

Preferably, further, the control unit 50 is configured to set a program for machining the semiproduct as a function of the real values of the determined operational or dimensional parameters. In other words, the method also comprises a further step of automatically adjusting a machining program of the semiproduct as a function of the real values of the determined operational or dimensional parameters.

The at least one operational or dimensional parameter may be at least one of: an axial inclination of the rotation axis "X", an eccentricity of the rotation axis "X", a real machining diameter of the milling disc 23, a radial profile of the teeth 25, a flatness of the milling disc 23, a thickness of the core 24 of the milling disc 23 and/or a thickness of the teeth 26 of the milling disc 23. Figures 2A, 3A, 3B, 4A, 4B, 5A, 5B, 6A and 6B illustrate various operational sequences regarding the determination of the above-mentioned operational or dimensional parameters.

Figure 2A shows an operational sequence in which the determined operational or dimensional parameter is the real machining diameter of the milling disc 23. As shown in the drawings, the working unit 20 is moved so that the measuring device 60 takes a measurement substantially tangential to the end of the teeth 26 during the rotation of the working tool 22, allowing the maximum diameter described by the teeth 25 to be detected under dynamic conditions.

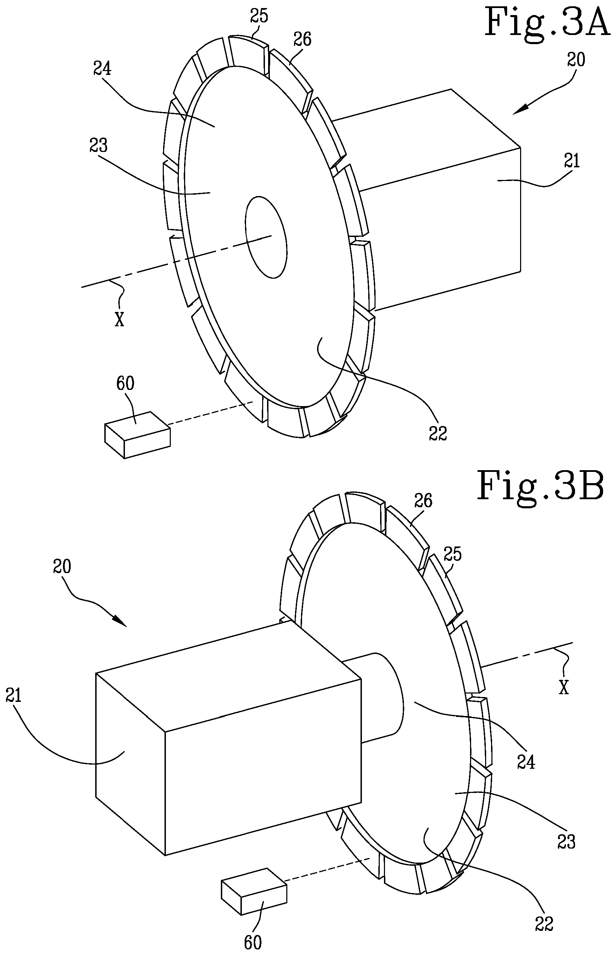

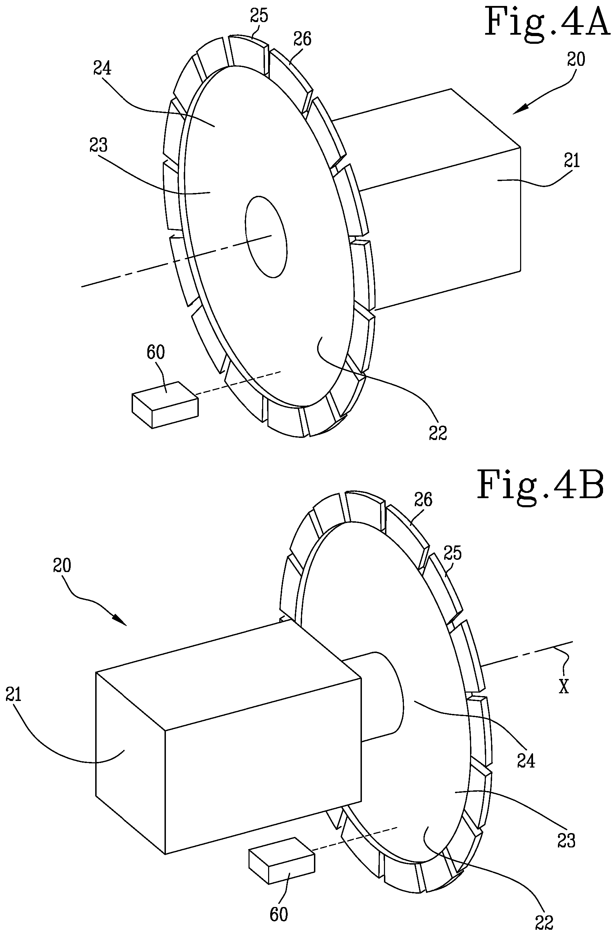

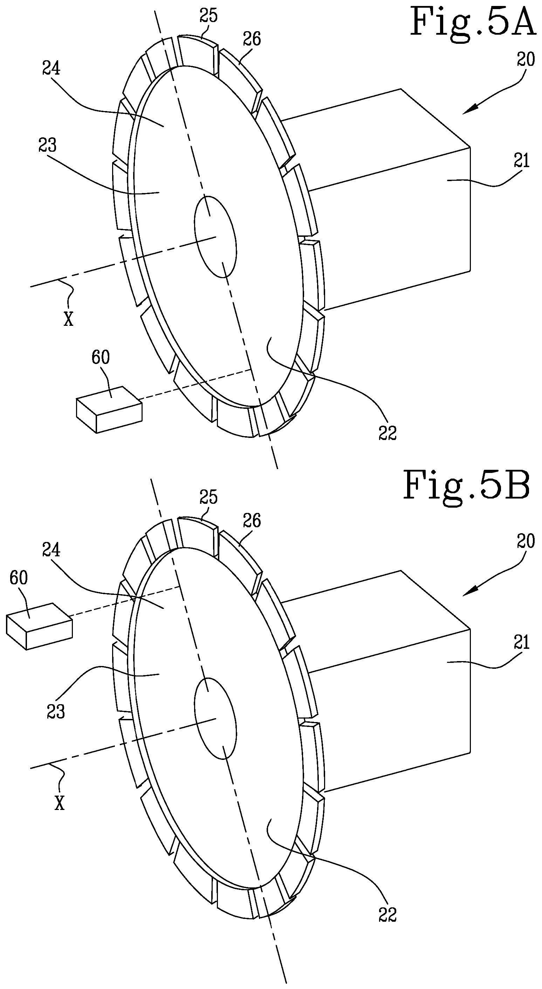

Figures 3A and 3B show an operational sequence in which the determined operational or dimensional parameter is the thickness of the teeth 26 of the milling disc 23. As can be seen in Figure 3A, the working unit 20 is positioned in a first position so that the measuring device 60 detects a first distance on a first side of the teeth 26. Subsequently, as can be seen in Figure 3B, the working unit 20 is then positioned in a second measuring position, different from the first measuring position, so that the measuring device 60 detects a second distance on a second side of the teeth 26, opposite the first side. In other words, the working unit 20 has been substantially moved so that the milling disc 23 is rotated by 180° between the first measuring position and the second measuring position. The difference between the two measurements, corrected for the known geometry of the system, thus determines the real thickness of the teeth 26. Figures 4A and 4B show an operational sequence in which the determined operational or dimensional parameter is the thickness of the core 24 of the milling disc 23. As can be seen in Figure 4A, the working unit 20 is positioned in a first position so that the measuring device 60 detects a first distance on a first side of the core 24. Subsequently, as shown in figure 4B, the working unit 20 is then positioned in a second measuring position so that the measuring device 60 detects a second distance on a second side of the core 24, opposite the first side. In other words, the working unit 20 has been substantially moved so that the milling disc 23 is rotated by 180° between the first measuring position and the second measuring position. The difference between the two measurements, corrected for the known geometry of the system, thus determines the real thickness of the core 24. Figures 5A and 5B show an operational sequence in which the determined operational or dimensional parameter is an axial inclination of the axis of rotation "X" of the milling disc 23. The term "axial inclination" means an angular misalignment of the axis of rotation "X" of the working tool 22 with respect to the nominal geometry of the working unit 20. This inclination may originate from a non-orthogonal assembly of the milling disc 23 on the electrospindle 21, from wear of the fixing components, or from an intrinsic misalignment of the electrospindle 21 itself. As can be seen in Figure 5A, the working unit 20 is positioned in a first measuring position so that the measuring device 60 detects a first distance on one side of the core 24 or of the teeth 26. In particular, the first distance is detected in the vicinity of a first point. As can be seen in Figure 5B, the working unit 20 is then positioned in a second measuring position so that the measuring device 60 detects a second distance on the same side of the core 24 or of the teeth 26 but in the vicinity of a second point, different from the first point. The first and the second point are substantially at the same distance from the centre of the milling disc 23. The first distance and the second distance are then compared in such a way as to determine the axial inclination of the axis of rotation "X" of the milling disc 23.

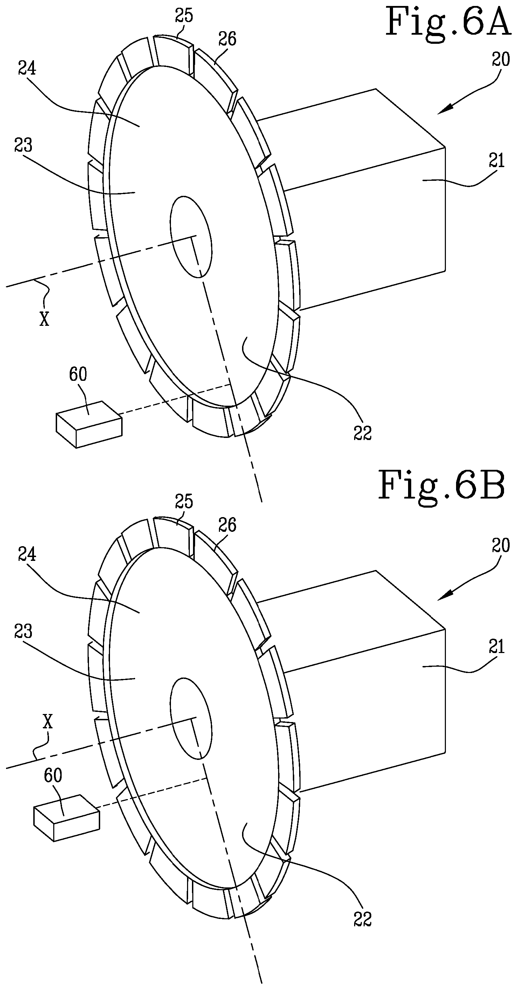

Figures 6A and 6B show an operational sequence in which the determined operational or dimensional parameter is a flatness of the milling disc 23. As can be seen in Figure 5A, the working unit 20 is positioned in a first measuring position so that the measuring device 60 detects a first distance on one side of the core 24 or of the teeth 26. In particular, the first distance is detected in the vicinity of a first point. As can be seen in Figure 5B, the working unit 20 is then positioned in a second measuring position so that the measuring device 60 detects a second distance on the same side of the core 24 or of the teeth 26 but in the vicinity of a second point, different from the first point. The first and second points lie at different distances from the centre of the milling disc 23 but are aligned with each other along the same radial direction. The first distance and the second distance are then compared so as to determine whether the milling disc 23 has deformations such as to alter its flatness.

Preferably, the measuring device 60 is a laser device.

Preferably, the measuring device 60 is configured for capturing the distance measurements when the working unit 20 is driven in rotation.

Preferably, the gantry milling machine 1 comprises an accessory movement system (not illustrated) configured to move the measuring device 60 between a disengaged position and an operational position.

Preferably, the control unit 50 is configured to compare the real value of at least one operational or dimensional parameter with a reference value of the corresponding operational or dimensional parameter: the control unit 50 is configured to generate a positive or negative signal as a function of the outcome of the comparison. The positive signal may be representative of the fact that the real value of the at least one operational or dimensional parameter substantially coincides (that is, it is within an allowed tolerance, or range) with the reference value of the corresponding operational or dimensional parameter. Further, the negative signal may be representative of the fact that the real value of the at least one operational or dimensional parameter does not substantially coincide (that is, it is outside an allowed tolerance, or range) with the reference value of the corresponding operational or dimensional parameter.

If the control unit 50 generates a negative signal, the control unit 50 is preferably configured to generate a command to replace the working tool 22 with a test tool which is not deformed. The control unit 50 is further configured to position said working unit 20 with the test tool in a plurality of measuring positions and for capturing new distance measurements from the measuring device 60 after the replacement. The control unit 50 is configured to identify a malfunction of the electrospindle 21 or the movement system 40 if the negative signal persists, or to identify a defect of the replaced working tool 22 if the signal becomes positive.

At an operational level, the control unit 50 generates a negative signal and then a replacement command. An operator then replaces the working tool 22 with a test tool (not shown). The measurements are then repeated again. If the result of the comparison is still negative, the error can clearly be attributable to the electrospindle 21 or to the movement system 40. If the result of the comparison is positive, the error can be traced back to working tool 22.

Preferably, the gantry milling machine 1 comprises a user interface device 51, connected to the control unit 50 and configured to receive commands from the user and control at least the measurement operations.

According to an embodiment not illustrated, the user interface device 51 is remotely connected to the control unit 50 via a wireless or network connection.

The present invention achieves the preset aims overcoming the drawbacks of the prior art.

## Claims

1. A gantry milling machine (1) for machining semiproducts, comprising:
- a supporting structure (10);
- a working unit (20) provided with an electrospindle (21) and a working tool (22), connected to said electrospindle (21);
- a work table (30);
- a movement system (40), coupled to the supporting structure (10) and to said working unit (20), and configured to move said working unit (20) relative to said work table (30);
- a programmable control unit (50) configured to coordinate the movements of said working unit (20) relative to the work table (30);
**characterized in that** it comprises a measuring device (60) configured to capture a series of values of distance from the working tool (22); and
wherein said control unit (50) is configured for:
- positioning said working unit (20) at a plurality of measuring positions;
- capturing measurements of distance from said measuring device (60) at each of said measuring positions;
- based on said distance measurements and on the corresponding measuring positions, finding a real value of at least one operational or dimensional parameter of said working unit (20).

2. The gantry milling machine (1) according to claim 1, wherein the control unit is configured to modify a program for machining the semiproduct as a function of the real values of the operational or dimensional parameters found.

3. The gantry milling machine (1) according to claim 1 or 2, wherein said at least one parameter comprises at least one between: an axial inclination of the rotation axis (X) of the working tool (22) and/or an eccentricity of the rotation axis (X) of the working tool (22).

4. The gantry milling machine (1) according to any one of the preceding claims, wherein said working tool (22) is a milling disc (23) provided with a core (24) and teeth (26), and wherein said at least one parameter comprises at least one between: a real machining diameter of the milling disc (23), a radial profile of the teeth (26), a flatness of the surface of the milling disc (23), a thickness of the core (24) of the milling disc (23) and/or a thickness of the teeth (26) of the milling disc (23).

5. The gantry milling machine (1) according to any one of the preceding claims, wherein said measuring device (60) is a contactless measuring device, preferably a laser device.

6. The gantry milling machine (1) according to any one of the preceding claims, wherein the measuring device (60) is configured to capture the distance measurements when the working unit (20) is driven in rotation.

7. The gantry milling machine (1) according to any one of the preceding claims, comprising an accessory movement system configured to move said measuring device (60) between a disengaged position and an operating position.

8. The gantry milling machine (1) according to any one of the preceding claims, comprising a user interface device (51), connected to said control unit (50) and configured to receive commands from the user and to drive at least the measuring operations.

9. The gantry milling machine (1) according to any one of the preceding claims, wherein said control unit (50) is configured to compare said real value of said operational or dimensional parameter with a reference value of the corresponding operational or dimensional parameter, and wherein said control unit (50) is configured to generate a positive or negative signal as a function of a result of said comparison.

10. The gantry milling machine (1) according to claim 9, wherein, responsive to a negative signal, said control unit (50) is configured for:
- generating a command to replace the working tool (22) with a test tool which is not deformed;
- positioning said working unit (20) with the test tool at a plurality of measuring positions;
- capturing other distance measurements via said measuring device (60) after the replacement;
- identifying a malfunction of the electrospindle (21) or of the movement system (40) if the negative signal persists, or identifying a defect of the working tool (22) if the signal becomes positive.

11. The gantry milling machine (1) according to claim 8 or 9 or 10, wherein said user interface device (51) is connected remotely to said control unit (50) via a wireless connection or via a network.

12. A method for setting a gantry milling machine (1) for machining semiproducts, comprising the following steps:
- positioning a working tool (20), provided with an electrospindle (21) and a working tool (22) at a plurality of predetermined measuring positions relative to a work table (30);
- via a measuring device (60), capturing values of distance between the measuring device (60) and the working tool (22) at each measuring position;
- via a programmable control unit (50), finding a real value of at least one operational or dimensional parameter of the working unit (20) by processing the distance values captured and the corresponding measuring positions.

13. The method according to claim 12, comprising a further step of automatically regulating a program for machining the semiproduct as a function of the real values of the operational or dimensional parameters found..

14. The method according to claim 12 or 13, wherein said at least one operational or dimensional parameter comprises: an axial inclination of the rotation axis (X) of the working tool (22) and/or an eccentricity of the rotation axis (X) of the working tool (22).

15. The method according to any one of claims 12 to 14, wherein said working tool (22) is a milling disc (23) provided with a core (24) and teeth (26), and wherein said at least one parameter comprises at least one between: a real machining diameter of the milling disc (23), a radial profile of the teeth (26), a flatness of the surface of the milling disc (23), a thickness of the core (24) of the milling disc (23) and/or a thickness of the teeth (26) of the milling disc (23).
